# EUROPÄISCHE PATENTSCHRIFT

(11) **EP 2 168 846 B1**
(45) Veröffentlichungstag und Bekanntmachung des Hinweises auf die Patenterteilung: **09.07.2014**
(21) Anmeldenummer: 09011110.5
(22) Anmeldetag: 31.08.2009
(51) Int. Cl.: B62D 27/06, F16B 3/06

(54) **Vorrichtung zur lösbaren Verbindung von Baugruppenträgern eines sich aus Baugruppen modular zusammensetzbaren Kraftfahrzeuges**
Device for reversible connection of assembly holders of a motor vehicle composed of modular components
Dispositif de liaison amovible de supports de blocs d'un véhicule automobile pouvant être assemblé de manière modulaire par des blocs

(30) Priorität: 26.09.2008 DE 102008049145
(43) Veröffentlichungstag der Anmeldung: 31.03.2010
(73) Patentinhaber: Rheinmetall Landsysteme GmbH, 29345 Unterlüß (DE)
(72) Erfinder: Kröger, Hartwig, 24161 Altenholz (DE)
(74) Vertreter: Dietrich, Barbara

(56) Entgegenhaltungen:
- WO-A-2008/107516
- CN-Y- 2 572 092

## Beschreibung

Die Erfindung betrifft eine Vorrichtung mit mindestens einem Verbindungselement zur lösbaren Verbindung von mindestens zwei Baugruppenträgern eines sich aus Baugruppen zusammensetzbaren Kraftfahrzeuges.

Ein aus mehreren unterschiedlichen Baugruppen oder Modulen zusammensetzbares Fahrzeug ist beispielsweise aus der DE 10 2004 006 819 A1 bekannt. Dabei besteht das dort offenbarte gepanzerte Fahrzeug im Wesentlichen aus einem Hauptmodul (Sicherheitszelle), einem Front- und einem Heckmodul. Die Verbindung der Baugruppenträger (Karosserien) dieser Module miteinander erfolgt über Bolzenverbindungen, wobei es sich bei den Bolzen um Sprengbolzen handelt.

Bolzenverbindungen weisen allerdings den Nachteil auf, dass sie zwar in axialer Richtung hohe Kräfte übertragen können, dass aber zur Aufnahme von Querkräften relativ aufwendige Verbindungskonstruktionen erforderlich sind.

Es ist zwar naheliegend, die einzelnen Baugruppenträger eines Kraftfahrzeuges miteinander zu verschweißen, doch können bei Verwendung von Schweißnähten Schwächungen im Bereich der Schweißnähte auftreten. Außerdem ist eine beispielsweise aus Wartungsgründen erforderliche nachträgliche Trennung der Baugruppenträger und damit auch der Fahrzeugmodule nur mit erheblichem Aufwand möglich.

Die gattungsbildende WO 2008107516 betrifft eine Verbindungsanordnung sowie einen Arretierbolzen. Über diese Verbindungsanordnung werden zwei Elemente miteinander verbunden. Die Verbindungsanordnung besteht aus einem Adapter mit konischer Form. In diesem ist ein Arretierbolzen geführt. Die Elemente besitzen der konischen Form des Adapters nachgebildete Öffnungen, über die beide miteinander verbunden werden. Das Spannen des Adapters erfolgt über den Bolzen, wobei das Schraubgewinde des Bolzens in eine Bohrung des zweiten Elementes eingreift und den Adapter derart in die Öffnungen zieht, dass das erste Element mit dem zweiten Element fest verbunden ist.

Die CN - Y- 2 572 092 betrifft eine Verbindung und hat die Aufgabe, eine feste Sicherung einer Welle in einem Block zu realisieren. Das lose Kupplungselement ist geschlitzt, um sich an die Welle anpressen zu können. Eine formschlüssige Verbindung wird über eine zusätzliche Passfeder geschaffen.

Der Erfindung liegt die Aufgabe zugrunde, mit möglichst geringem Kostenaufwand eine Vorrichtung der eingangs erwähnten Art zu schaffen, mit der eine lösbare Verbindung zwischen benachbarten Baugruppenträgern eines Kraftfahrzeuges hergestellt werden kann, welche die bei derartigen Fahrzeugen auftretenden axialen Kräfte und Querkräfte sicher aufnimmt.

Diese Aufgabe wird erfindungsgemäß durch die Merkmale des Anspruchs 1 gelöst.

Die Erfindung beruht im Wesentlichen auf dem Gedanken, dass die Vorrichtung ein mit einem ersten Baugruppenträger verbundenes erstes Konusteil mit einem Innenkonus und ein mit einem zweiten Baugruppenträger verbundenes zweites Konusteil mit einem Außenkonus umfasst, wobei der Außenkonus des zweiten Konusteiles bei der Verbindung der beiden Baugruppenträger formschlüssig in den Innenkonus des ersten Konusteiles eingreift und durch das als Gewindebolzen ausgebildete Verbindungselement eine Verspannung der beiden Konusteile erfolgt, wobei der Gewindebolzen durch das erste Konusteil axial hindurchgeführt und in ein entsprechendes Innengewinde des zweiten Konusteiles eingeschraubt ist.

Die erfindungsgemäße Vorrichtung überträgt klar definierbare Kräfte, wobei der Gewindebolzen im Wesentlichen nur in axialer Richtung belastet wird und hierfür entsprechend ausgelegt sein muss. Hingegen überträgt die aus Innen- und Außenkonus bestehende Anordnung Querkräfte und Momente, wobei im Hinblick auf die dabei maximal auftretenden Kräfte die Steigung des Kegelsitzes entsprechend gewählt werden muss. Außerdem bewirkt der Kegelsitz eine Zentrierung der beiden miteinander zu verbindenden Baugruppenträger.

Bei einem weiteren Ausführungsbeispiel, das nicht weiter beansprucht wird, sind im Bereich der beiden Konus-teile außenseitig Aufnahmebereiche für mindestens zwei Gewindebolzen In den Baugruppenträgern vorgesehen, durch welche die beiden Baugruppenträger miteinander verbunden und die Konusteile verspannt werden.

Weitere Einzelheiten ergeben sich aus den folgenden, anhand von Figuren erläuterten Ausführungsbeispielen.

Es zeigen:
Fig. 1 eine schematische Darstellung eines ersten Ausführungsbeispieles einer erfindungsgemäßen Vorrichtung mit einer zentrischen Verspannung der Konusteile benachbarter Baugruppenträger eines Kraftfahrzeuges und
Fig. 2 eine schematische Darstellung eines zweiten Ausführungsbeispieles einer nicht weiter beanspruchten Vorrichtung mit einer äußeren Verspannung der Konusteile benachbarter Fahrzeugkarosserien eines Kraftfahrzeuges.

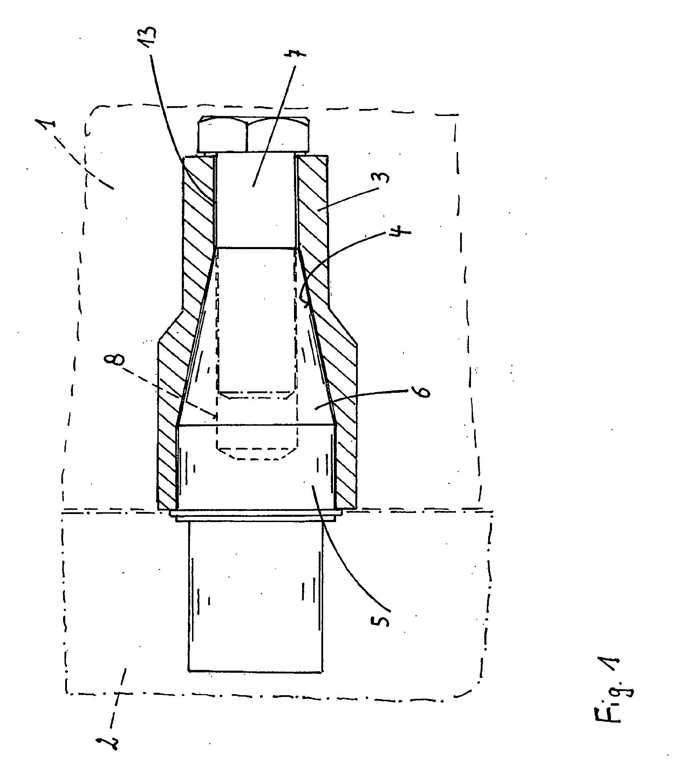

In Fig. 1 sind mit 1 und 2 zwei miteinander verbundene Baugruppenträger (Fahrzeugkarosserien) eines sich aus mehreren Baugruppen (Modulen) zusammensetzbaren Kraftfahrzeuges bezeichnet. Mit dem ersten Baugruppenträger 1 ist dabei ein erstes Konusteil 3 mit einem Innenkonus 4 und mit dem zweiten Baugruppenträger 2 ist ein zweites Konusteil 5 mit einem Außenkonus 6 fest verbunden. Dabei greifen der Außenkonus 6 des zweiten Konusteiles 5 formschlüssig in den Innenkonus 4 des ersten Konusteiles 3 ein.

Die Verspannung der beiden Konusteile 3 und 5 wird durch einen Gewindebolzen 7 sichergestellt, der durch eine Bohrung 13 durch das erste Konusteil 3 axial hindurchgeführt und in ein entsprechendes Innengewinde 8 des zweiten Konusteiles 5 eingeschraubt ist.

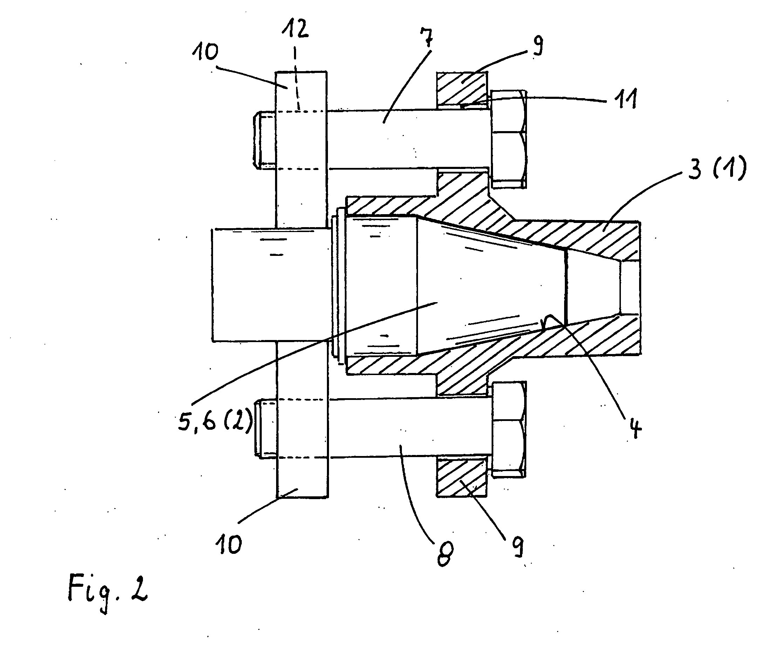

Fig. 2 zeigt ein Ausführungsbeispiel einer nicht weiter beanspruchten Vorrichtung, bei der wiederum die Baugruppenträger mit 1 und 2 und die an den Baugruppenträgern 1 und 2 befestigten Konusteile mit 3 und 5 bezeichnet sind. Zur Verspannung der Konusteile 3 und 5 sind in diesem Fall allerdings im Bereich der beiden Konusteile 3, 5 jeweils außenseitlg zwei gegenüberliegende Aufnahmebereiche 9, 10 für zwei Gewindebolzen 7 vorgesehen. Die Schäfte dieser Gewindebolzen 7 sind durch Bohrungen 11 der Aufnahmebereiche 9 hindurch gesteckt und in entsprechende Innengewinde 12 der Aufnahmebereiche 10 eingeschraubt.

Die Erfindung ist selbstverständlich nicht auf das vorstehend beschriebene und beanspruchte Ausführungsbeispiel beschränkt. So werden üblicherweise nicht nur zwei erfindungsgemäße Vorrichtungen zur Verbindung zweier Baugruppenträgern eines Kraftfahrzeuges verwendet, sondern eine der Kraftübertragung zwischen den Bauträgern erforderliche Anzahl von Vorrichtungen.

### Bezugszeichen liste

- 1,2: Baugruppenträger
- 3: (erstes) Konusteil
- 4: Innenkonus
- 5: (zweites) Konusteil
- 6: Außenkonus
- 7: Gewindebolzen, Verbindungselement
- 8: Innengewinde
- 9,10: Aufnahmebereich
- 11: Bohrung
- 12: Innengewinde
- 13: Bohrung

## Patentansprüche

1. Vorrichtung mit mindestens einem Verbindungselement (7) zur lösbaren Verbindung von mindestens zwei Baugruppenträgern (1, 2) eines sich aus Baugruppen zusammensetzbaren Kraftfahrzeuges, wobei die Vorrichtung ein mit dem ersten Baugruppenträger (1) verbundenes erstes Konusteil (3) mit einem Innenkonus (4) und ein mit dem zweiten Baugruppenträger (2) verbundenes zweites Konusteil (5) mit einem Außenkonus (6) umfasst, und wobei der Außenkonus (6) des zweiten Konusteiles (2) bei der Verbindung der beiden Baugruppenträger (1, 2) formschlüssig in den Innenkonus (4) des ersten Konusteiles (3) eingreift und durch das als Gewindebolzen ausgebildete Verbindungselement (7) eine Verspannung der beiden Konusteile (3, 5) erfolgt, **dadurch gekennzeichnet, dass** der Gewindebolzen (7) durch eine Bohrung (13) des ersten Konusteiles (3) axial hindurchgeführt und in ein entsprechendes Innengewinde (8) des zweiten Konusteiles (5) eingeschraubt ist.

## Claims

1. Device with at least one connecting element (7) for the releasable connection of at least two assembly holders (1, 2) of a motor vehicle composed of modular components, wherein the device comprises a first conical part (3) which is connected to the first assembly holder (1) and has a female taper (4) and a second conical part (5) which is connected to the second assembly holder (2) and has a male taper (6), and wherein, when the two assembly holders (1, 2) are connected, the male taper (6) of the second conical part (5) engages in the female taper (4) of the first conical part (3) in an interlocking manner, and the two conical parts (3, 5) are braced by the connecting element (7), which is in the form of a threaded bolt, **characterized in that** the threaded bolt (7) is guided axially through a bore (13) in the first conical part (3) and is screwed into a corresponding internal thread (8) of the second conical part (5).

## Revendications

1. Dispositif comprenant au moins un élément de liaison (7) pour la liaison amovible d'au moins deux supports de blocs (1, 2) d'un véhicule automobile pouvant être assemblé à partir de blocs, le dispositif comprenant une première partie conique (3) reliée au premier support de blocs (1), avec un cône interne (4) et une deuxième partie conique (5) reliée au deuxième support de blocs (2) avec un cône externe (6), le cône externe (6) de la deuxième partie conique (5), lors de la liaison des deux supports de blocs (1, 2), s'engageant par correspondance de forme dans le cône interne (4) de la première partie conique (3) et, par l'élément de liaison (7) réalisé sous forme de boulon fileté, un serrage des deux parties cloniques (3, 5) se produisant, **caractérisé en ce que** le boulon fileté (7) est guidé axialement à travers un alésage (13) de la première partie conique (3) et est vissé dans un filetage interne correspondant (8) de la deuxième partie conique (5).
